# EUROPÄISCHE PATENTANMELDUNG

(11) **EP 3 838 470 A1**
(43) Veröffentlichungstag der Anmeldung: **23.06.2021**
(21) Anmeldenummer: 19216784.9
(22) Anmeldetag: 17.12.2019
(51) Int. Cl.: B23K 26/03, B23K 26/16, B23K 37/08, B23K 37/04

(54) **FREMDTEIL- UND SCHLACKENDETEKTION AN EINEM ARBEITSTISCH**

(71) Anmelder: Bystronic Laser AG, 3362 Niederönz (CH)
(72) Erfinder: Jacobi, Stefan, 59597 Bad Westernkotten (DE); Villiger, Herbert, 4556 Bolken (CH)
(74) Vertreter: Schwarz und Baldus Patentanwälte

(57) **Zusammenfassung**

Es wird eine Vorrichtung zum Prüfen auf Fremdteile (7) und/oder Ablagerungen(4) an Auflageelementen (1) eines Arbeitstisches (2), wobei die Auflageelemente (1) zur Auflage eines Flächiges Werkstücks (10) zum Schneiden mit einem Laser oder einem Wasserstrahl vorgesehen sind, wobei die Auflageelemente (1) parallel zueinander angeordnet sind und einen ersten Abstand zueinander aufweisen, beschrieben, umfassend: einen Sensor (5, 6) zum Erkennen der Fremdteile (7) und/oder der Ablagerungen(4) im Zwischenraum zwischen jeweils zwei Auflageelementen (1).

## Beschreibung

Die vorliegende Erfindung betrifft eine Vorrichtung zur Detektion von Fremdteilen und Ablagerungen an einem Arbeitstisch einer Laser- oder Wasserstrahlschneidanlage und ein Verfahren zur Anwendung.

Im Stand der Technik ist bekannt, dass flächige Werkstücke mit einem Laser oder einem Wasserstrahl geschnitten oder anderweitig bearbeitet werden. Außerdem ist bekannt, Sensoren bei derartigen Anlagen einzusetzen.

Beispielsweise beschreibt die JP 4339582A eine Laserschneidanlage bei der eine Kamera die Ausschnitte auf Maßhaltigkeit prüft. In der CN 201596852U wird eine Kamera zur Steuerung einer Schneidanlage verwendet.

Ein flächiges Werkstück, z.B. ein Blech, das durch eine Laserschneidanlage geschnitten werden soll, wird auf einem Gitterrost aufgelegt. Das Gitterrost besteht aus parallel ausgerichteten Gitterroststäben bzw. Auflageelementen, zwischen denen ein definierter Abstand besteht. Nach dem Schneiden des Blechs können die geschnittenen Teile zwischen den Auflageelementen durch den Abstand nach unten fallen und werden am Boden des Arbeitstisches aufgefangen. Diese Werkstücke können danach weiter bearbeitet werden.

Es kann jedoch vorkommen, dass ein ausgeschnittenes Teil im Zwischenraum zwischen zwei Auflageelementen hängen bleibt. Außerdem können sich durch das Laserschneiden Ablagerungen, insbesondere eine sogenannte Schlacke, bilden, die sich an einem Auflageelement festsetzt.

Die hängengebliebenen Teile müssen aus dem Gitterrost entnommen werden. Ebenso ist die Schlacke aus dem Gitterrost zu entfernen. Ansonsten kann es vorkommen, dass in einem nächsten Arbeitsprozess ein weiteres zu bearbeitendes flächiges Werkstück nicht eben auf dem Gitterrost aufliegt und nicht korrekt geschnitten werden kann.

Befinden sich Fremdteile oder Ablagerungen zwischen den Auflageelementen, kann es außerdem zu einem Crash kommen, falls die Gabeln eines rechenartigen Hebesystems zwischen die Auflageelemente fahren bzw. sobald dessen Gabeln nach oben bewegt werden, um das Restgitter oder die ausgeschnittene Teile vom Arbeitstisch hochzuheben und weg zu transportieren.

Die Voraussetzung für das Entfernen hängengebliebener Teile und das Reinigen des Gitterrosts von Ablagerungen ist das Erkennen, dass sich Teile oder Ablagerungen an dem betreffenden Gitterrost befinden.

Eine Aufgabe der Erfindung ist es daher, eine Vorrichtung und ein Verfahren zur Verfügung zu stellen, die/das prüft, ob eine Ablage, wie z.B. ein Gitterrost, frei von Ablagerungen oder sonstigen Fremdteilen ist, insbesondere frei von Fremdteilen, die aus dem flächigen Werkstück herausgeschnitten wurden.

Als erste Ausführungsform der Erfindung wird eine Vorrichtung zum Prüfen auf Fremdteile und/oder Ablagerungen an Auflageelementen eines Arbeitstisches zur Verfügung gestellt, wobei die Auflageelemente zur Auflage eines flächigen Werkstücks, insbesondere eines Blechs, zum Verarbeiten, insbesondere zum Schneiden mit einem Laser oder einem Wasserstrahl vorgesehen sind, wobei die Auflageelemente parallel zueinander angeordnet sind und einen ersten Abstand zueinander aufweisen, beinhaltend: einen Sensor zum Erkennen der Fremdteile und/oder der Ablagerungen im Zwischenraum zwischen jeweils zwei Auflageelementen. Bei dem Sensor handelt es sich vorzugsweise um einen optischen Sensor.

Der optische Sensor kann mit einer Bildverarbeitungseinheit in Datenaustausch stehen, die ausgebildet ist, ein Ausgabesignal zu erzeugen. Das Ausgabesignal differenziert zwischen den detektierten Objekten, insbesondere wird erfasst, ob eine Ablagerung (z.B. Schlacke) oder ein Fremdteil (z.B. ein verkipptes geschnittenes Teil) erkannt wurde. Das Ausgabesignal steuert unterschiedliche weitere Maßnahmen der Verarbeitung.

Bei der Auflage mit parallel verlaufenden Auflageelementen kann es sich um ein Gitterrost mit (parallel verlaufenden) Gitterroststäben handeln. Die Dimensionierung der Auflageelemente und deren Beabstandung ist für die Umsetzung der Erfindung frei konfigurierbar, so dass die Erfindung auch für unterschiedliche Typen von Auflagen anwendbar ist.

Durch die Anordnung eines Sensors können Fremdeile, insbesondere aus dem Werkstück (aus)geschnittene Teile, die sich zwischen den Auflageelementen verklemmt haben, erkannt werden. Würden derartige eingeklemmte Fremdteile nicht entfernt werden, bevor das flächige Werkstück nach der Bearbeitung vom Arbeitstisch wegtransportiert wird, könnte es zu einem Crash kommen. Insbesondere könnte hierbei ein Hebesystem (das auch als Transportsystem ausgebildet sein kann), das zum Hochheben des Blechs vom Arbeitstisch vorgesehen ist (z.B. ein Doppelgabelsystem), mit dem eingeklemmten Fremdteil oder den Auflageelementen kollidieren. Hierdurch könnte es zu einer Beschädigung der Zinken/Gabelzinken/Gabeln des Hebesystems und/oder der Auflageelemente kommen.

Im Folgenden soll unter dem Begriff "flächiges Werkstück" ein Werkstück verstanden werden, das z.B. aus Metall oder anderen Materialien bestehen kann (z.B. Kunststoff) und von einer Verarbeitungsmaschine verarbeitet werden soll. In einer bevorzugten Ausführungsform der Erfindung handelt es sich um ein Blech. Im Folgenden wird deshalb der besseren Lesbarkeit halber der Begriff "Blech" verwendet; andere flächige oder dreidimensionale Werkstücke liegen aber ebenso im Rahmen der Erfindung.

Als zweite Ausführungsform der Erfindung wird ein Verfahren zum Erkennen von Fremdteilen und/oder Ablagerungen an Auflageelementen eines Arbeitstisches mit einer Vorrichtung nach einem der Ansprüche 1 bis 9 zur Verfügung gestellt, aufweisend die Schritte: Prüfen des Zwischenraums zwischen einem ersten und einem zweiten Auflageelement auf Fremdteile und/oder Ablagerungen, wie z.B. Schlacke.

Als dritte Ausführungsform der Erfindung wird ein Computerprogrammprodukt zur Verfügung gestellt, das zumindest ein Softwareprogramm zur Realisierung eines Verfahrens nach einem der Ansprüche 10 bis 15 aufweist, wenn das Softwareprogramm auf einem Computer oder einer computerbasierten Einheit ausgeführt wird.

Als vierte Ausführungsform der Erfindung wird ein Computerprogramm zur Verfügung gestellt, durch elektronische Datenübertragung verteilbar, mit Computerprogrammcodemitteln, die so adaptiert sind, dass sie bewirken, dass bei Laden des Programms auf einen Computer dieser die Prozedur nach einem der Ansprüche 10 bis 16 ausführen kann.

Beispielhafte Ausführungsformen werden in den abhängigen Ansprüchen beschrieben.

Gemäß einer außerdem beispielhaften Ausführungsform der Erfindung wird eine Vorrichtung zur Verfügung gestellt, wobei der Sensor den Zwischenraum zwischen einem zweiten Abstand zu einem ersten Auflageelement und einem dritten Abstand zu einem zweiten Auflageelement prüft.

Die Zinken/Gabelzinken/Gabeln des Haltesystems fahren in den Zwischenraum zwischen zwei gegenüber stehenden Auflageelementen, also unter das hochzuhebende fertig bearbeitete flächige Werkstück, um selbiges anzuheben und weg zu transportieren. Vorteilhafterweise wird dieser Zwischenraum, in den die Zinken einfahren, auf Ablagerungen oder sonstige Fremdteile geprüft. Einen Crash des Hebesystems kann auf diese Weise ausgeschlossen werden.

In einer noch weiteren erfindungsgemäßen Ausführungsform wird eine Vorrichtung zur Verfügung gestellt, wobei die Summe des zweiten Abstands und des dritten Abstands kleiner als der erste Abstand ist.

Gemäß einer beispielhaften Ausführungsform der Erfindung wird eine Vorrichtung zur Verfügung gestellt, wobei der erste Abstand in einem Bereich zwischen 50mm und 60 mm und insbesondere 54 mm beträgt und/oder wobei der zweite Abstand zwischen 10 und 15mm und insbesondere maximal 12 mm beträgt und/oder wobei der dritte Abstand in einem Bereich zwischen 10 und 15 mm und insbesondere maximal 12 mm beträgt. Der erste, zweite und/oder dritte Abstand ist vorkonfigurierbar. Dies hat den Vorteil, dass das System auf unterschiedliche Werk- oder Arbeitstisches angepasst werden kann.

"Wächst" die Ablagerungen an einem Auflageelement nicht weiter als der vorkonfigurierte Abstand, z.B. 12 mm in Richtung zu dem gegenüberliegenden Auflageelement, kann davon ausgegangen werden, dass der Zwischenraum genügend frei von Ablagerungen ist, dass sich kein Crash ereignen kann.

In einer weiteren erfindungsgemäßen Ausführungsform wird eine Vorrichtung zur Verfügung gestellt, wobei der Sensor als Durchlicht- oder Auflichtsensor ausgebildet ist.

Ist der Sensor in einem Durchlichtverfahren eingesetzt, kann eine einfache und genaue Justierung des Sensorstrahls vorgenommen werden. Hierbei kann sichergestellt werden, dass der relevante Zwischenraum auf Ablagerungen und Fremdteile geprüft wird. Ist der Sensor in einem Auflichtverfahren geschaltet, ist vorteilhafterweise der Sender und der Empfänger am selben Ort, wodurch eine Wartung des Sensors erleichtert wird.

Gemäß einem weiteren Ausführungsbeispiel der vorliegenden Erfindung wird eine Vorrichtung zur Verfügung gestellt, wobei der Sensor einen Sender und einen Empfänger umfasst, wobei der Sender derart gegenüber dem Empfänger angeordnet ist, dass der Sensorstrahl parallel oder schräg zu den jeweiligen Auflageelementen ausgerichtet ist, deren Zwischenraum zu prüfen ist, oder wobei der Sender und der Empfänger nebeneinander zum Prüfen des Zwischenraums mit dem Triangulationsverfahren angeordnet sind.

Wird der Sensorstrahl nicht parallel zu den Auflageelementen ausgerichtet, deren Zwischenraum zu prüfen ist, so kann vorteilhafterweise mit nur einem Sensorstrahl eine Fläche des Zwischenraums auf Fremdteile geprüft werden.

In einer weiteren erfindungsgemäßen Ausführungsform wird eine Vorrichtung zur Verfügung gestellt, wobei die Vorrichtung erkennt, dass das flächige Werkstück kein Fremdteil oder Ablagerungen ist. Insbesondere kann eine weitere Signalverarbeitung ausgeführt werden, die zwischen diesen beiden vorstehend genannte Fällen differenziert. Der Sensor kann als optischer Sensor ausgebildet sein. Der Sensor kann eine Abstandsmessung (z.B. lichtlaufzeit-basiert) umfassen oder beinhalten.

Eine Prüfung auf Fremdteile und Ablagerungen erfolgt, bevor das Hebesystems zwischen entsprechende Auflageelemente eingefahren wird. Infolgedessen liegt zur Zeit der Prüfung das bearbeitete flächige Werkstück, insbesondere Blech, noch auf dem Arbeitstisch. Es könnte sein, dass im Sichtfeld des Sensors das Blech gerät. In diesem Fall wird vorteilhafterweise das Blech nicht mit Ablagerungen oder einem Fremdteil verwechselt.

Gemäß einem weiteren Ausführungsbeispiel der vorliegenden Erfindung wird eine Vorrichtung zur Verfügung gestellt, wobei die Vorrichtung ein Element zum Anzeigen, insbesondere Anleuchten, von Ablagerungen und/oder Fremdteilen umfasst.

Werden Ablagerungen oder ein eingeklemmtes Fremdteil erkannt, müssen die Ablagerungen oder das Fremdteil entfernt werden, bevor das Hebesystem zum Einsatz kommt. Muss die Ablagerung oder das Fremdteil händisch entfernt werden, ist es vorteilhaft, dass die erfindungsgemäße Vorrichtung dem beauftragten Werker den Ort der Ablagerungen oder des Fremdteils automatisch durch Anleuchten, beispielsweise durch einen roten Lichtpunkt, anzeigt.

Gemäß einem weiteren Ausführungsbeispiel der vorliegenden Erfindung wird eine Vorrichtung zur Verfügung gestellt, wobei der Sensor entlang des Arbeitstisches verfahrbar ist.

Vorteilhafterweise kann der Sensor entlang des Arbeitstisches verfahren werden, um mit einem einzigen Sensor mehrere Zwischenräume prüfen zu können.

In einer weiteren erfindungsgemäßen Ausführungsform wird ein Verfahren zur Verfügung gestellt, mit dem Schritt: Verfahren des Sensors entlang des Arbeitstisches und Prüfen des Zwischenraums zwischen einem dritten und einem vierten Auflageelement auf Fremdteile und/oder Schlacke.

Gemäß einem weiteren Ausführungsbeispiel der vorliegenden Erfindung wird ein Verfahren zur Verfügung gestellt, wobei der Sensor den Zwischenraum zwischen einem ersten Abstand zum ersten Auflageelement und einem zweiten Abstand zum zweiten Auflageelement prüft.

Gemäß einem weiteren Ausführungsbeispiel der vorliegenden Erfindung wird ein Verfahren zur Verfügung gestellt, wobei der erste Abstand und/oder der zweite Abstand in einem Bereich zwischen 10 und 15mm und vorzugsweise wenigstens 12 mm betragen.

In einer weiteren erfindungsgemäßen Ausführungsform wird ein Verfahren zur Verfügung gestellt, zusätzlich mit dem Schritt: Anzeigen, insbesondere Anleuchten, der Stellen im Arbeitstisch, an denen im Zwischenraum Ablagerungen und/oder Fremdteile durch den Sensor detektiert wurden.

Gemäß einem weiteren Ausführungsbeispiel der vorliegenden Erfindung wird ein Verfahren zur Verfügung gestellt, ferner mit dem Schritt: Entfernen der Ablagerungen und/oder der Fremdteile durch Pressluft und/oder mit dem Laser oder dem Wasserstrahl oder Entfernen der Ablagerungen und/oder der Fremdteile durch Vibration, insbesondere Vibration eines Systems zum Hochheben des Blechs vom Arbeitstisch nach dessen Bearbeitung.

Vorteilhafterweise können die Ablagerungen oder das Fremdteil "freigerüttelt" durch das Hebesystems werden. Dieses "Freirütteln" kann insbesondere automatisch durchgeführt werden, da erfindungsgemäß der Ort der Ablagerung oder des Fremdteils durch die Vorrichtung bekannt ist.

Als eine Idee der Erfindung kann angesehen werden, optische Sensoren derart zu verwenden, dass festgestellt werden kann, ob sich an einem Gitterrost eine Ablagerung befindet und es daher gereinigt werden muss bzw. ob Werkstücke in dem Gitterrost eingeklemmt sind. Hierdurch kann ein Crash mit einem Hebesystem und dem Arbeitstisch verhindert werden. Außerdem wird verhindert, dass das zu bearbeitende Blech wegen Ablagerung nicht eben auf dem Gitterrost aufliegt, wodurch sich in einem nachfolgenden Arbeitsschritt Werkstücke mit fehlerhaften Abmessungen ergeben können.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
Fig. 1 einen Wechseltisch/Arbeitstisch 2 mit einem Gitterrost aus einzelnen Auflageelementen 1 in perspektivischer Darstellung, auf dem Bleche zur Bearbeitung mit einem Laser oder einem Wasserstrahl aufgelegt werden können, wobei erfindungsgemäß ein Abstandssensor 5, 6 derart ausgerichtet ist, dass er zwischen und entlang den Auflageelementen 1 Ablagerungen oder Fremdteile feststellen kann,
Fig. 2 einen weiteren Arbeitstisch 2 in perspektivischer Darstellung mit einem Sensor 5 und einem Empfänger 6, die in einem Durchlichtverfahren angeordnet sind,
Fig. 3 einen Arbeitstisch 2 mit Auflageelementen 1 in einer Draufsicht, wobei ein Sensor 5, 6 in einem Durchlichtverfahren angeordnet ist,
Fig. 4 einen weiteren Arbeitstisch 2 mit Auflageelementen 1 in einer Draufsicht, wobei ein Sender 5a und ein Empfänger 6 als Sensor in einem Triangulationsverfahren angeordnet sind und
Fig. 5 den Arbeitstisch 2 in einer Draufsicht mit Zinken 8 eines Hebesystems 9.

### DETAILLIERTE BESCHREIBUNG BEISPIELHAFTER AUSFÜHRUNGSFORMEN

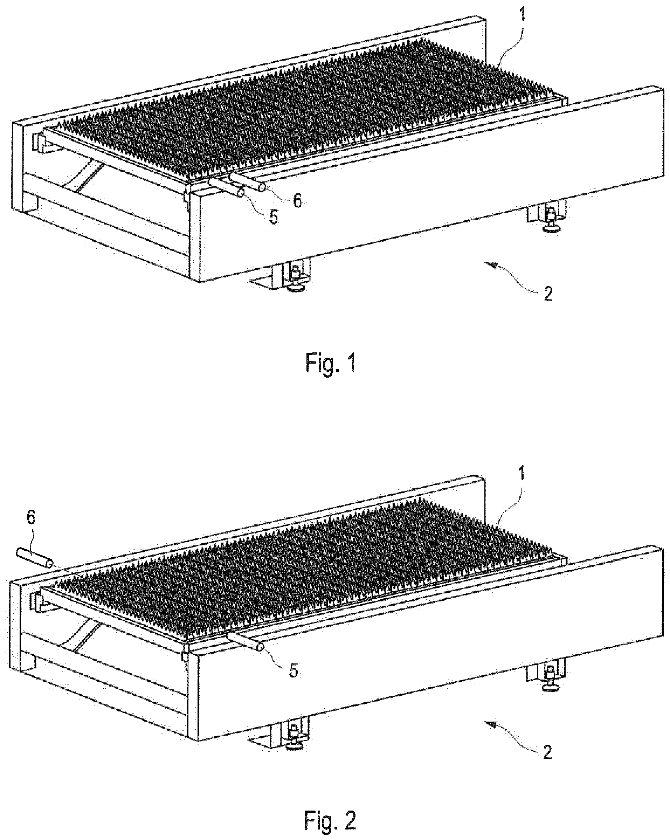

Fig. 1 zeigt einen Arbeitstisch in einer perspektivischen Darstellung mit Auflageelementen 1, auf denen ein flächiges Werkstück, z.B. ein Blech, angeordnet werden kann, um es durch einen Laser zu schneiden. Durch den Schneidvorgang kann sich eine Ablagerung, sogenannte Schlacke bilden, die an Auflageelementen hängen bleiben kann. Außerdem kann nach dem Verarbeiten des Werkstücks, insbesondere nach dem Schneiden des Blechs, die geschnittenen Werkstücke im Gitterrost hängenbleiben. Es kann sich daher Schlacke im Zwischenraum zwischen zwei benachbarten Auflageelementen bilden. Außerdem können sich ausgeschnittene Teile festsetzen.

Der Sensor 5, 6 ist mit dem Sender 5a und dem Empfänger 6 als optisches Abstandsmessgerät ausgebildet. Hierdurch kann festgestellt werden, ob sich in einem Zwischenraum zwischen zwei Auflageelementen Schlacke und/oder sonstige Fremdteile, beispielsweise Elemente, die aus dem Blech ausgeschnitten wurden, befinden. Derartige Elemente in einem Zwischenraum können zu einem Crash mit einer Gabel eines Rechensystems oder einem Bauteil eines Hebesystems führen.

**Fig.** 2 zeigt einen weiteren Arbeitstisch 2 mit Auflageelementen 1, wobei ein Sender 5a und ein Empfänger 6 in einem Durchlichtverfahren als Sensor 5, 6 zur Feststellung von Schlacke zwischen den Auflageelementen derart angeordnet ist, dass der Detektionsstrahl des Senders 5a parallel zu den Auflageelementen ausgebildet ist. Der Sensor 5, 6 kann senkrecht zu den Auflageelementen verfahren werden, sodass mehrere, insbesondere sämtliche, Zwischenräume der jeweiligen Auflageelemente 1 auf Schlacke oder Fremdteile geprüft werden können.

In einer besonderen Ausführungsform ist der Sensor 5, 6 derart ausgebildet, dass er nicht nur feststellen kann, ob Ablagerungen oder Fremdteile in einem Zwischenraum zwischen Auflageelementen 1 vorhanden sind, sondern dass er auch feststellen kann, ob es sich um Schlacke oder um ein Fremdteil handelt. Der Sensor kann somit zwischen Ablagerungen und Fremdteilen differenzieren. Dies ist wichtig, um entsprechend passende und unterschiedliche nachgelagerte Maßnahmen einleiten zu können. Falls Schlacke und kein Fremdteil festgestellt wurde, kann beispielsweise das Hebesystem dennoch eingesetzt werden, da Schlacke einer Gabel bzw. Zinke keinen großen mechanischen Widerstand entgegensetzen kann. Die Gabel bzw. der Zinken würde in diesem Fall die Schlacke wegbrechen und damit den Zwischenraum wieder freimachen. Stellt der Sensor 5, 6 jedoch fest, dass ein Fremdteil in einem Zwischenraum eingeklemmt ist, wird kein Versuch gestartet, mit einem Hebesystem das ausgeschnittene Blech hochzuheben. In diesem Fall ist das Risiko zu hoch, dass es zu einem Crash kommt.

In einer weiteren besonderen Ausführungsform kann der Sensor 5, 6 derart senkrecht zu den Auflageelementen 1 verfahren werden, dass eine Querschnittsfläche des Zwischenraums zwischen zwei Auflageelementen 1 geprüft werden kann. In diesem Fall wird daher nicht nur eine Linie zwischen zwei Auflageelementen 1, sondern eine Fläche zwischen zwei Auflageelementen 1 auf Ablagerungen und Fremdteile geprüft.

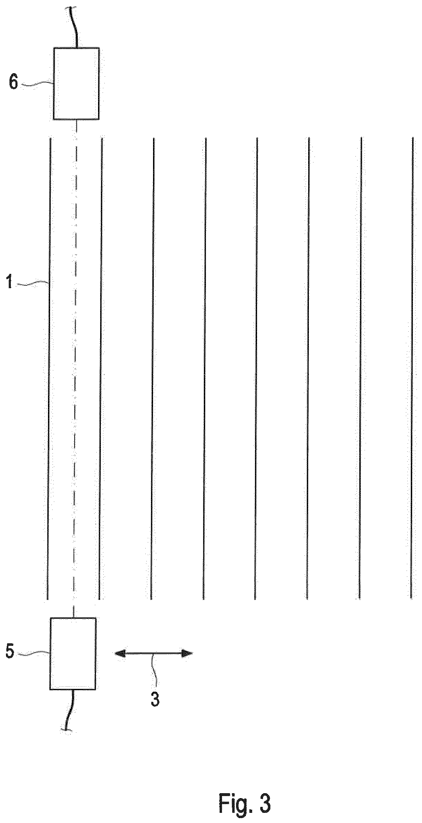

Fig. 3 zeigt einen Arbeitstisch mit Auflageelementen 1 in einer Draufsicht, wobei ein Sensor 5, 6 mit einem Sender 5a und einem Empfänger 6 in einem Durchlichtverfahren angeordnet sind. Der Sensor 5, 6 mit dem Sensor 5 und dem Empfänger 6 kann senkrecht zu den Auflageelementen 1 verfahren werden, sodass sämtliche Zwischenräume zwischen den jeweiligen Auflageelementen 1 auf Ablagerungen und Fremdteile geprüft werden können.

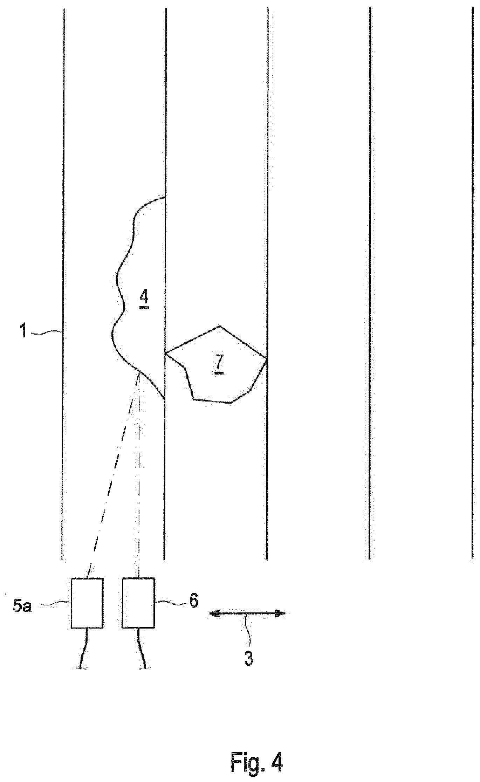

Fig. 4 zeigt einen weiteren Arbeitstisch mit Auflageelementen 1 in einer Draufsicht mit einem Sensor 5, 6, wobei ein Sender 5a und ein Empfänger 6 in einem Triangulationsverfahren angeordnet sind. Der Sensor 5, 6 kann Ablagerungen 4 und Fremdteile 7 detektieren. Hierzu kann der Sensor 5, 6 zwischen die Zwischenräume der Auflageelemente 1 in senkrechter Richtung 3 zu den Auflageelementen 1 verfahren werden.

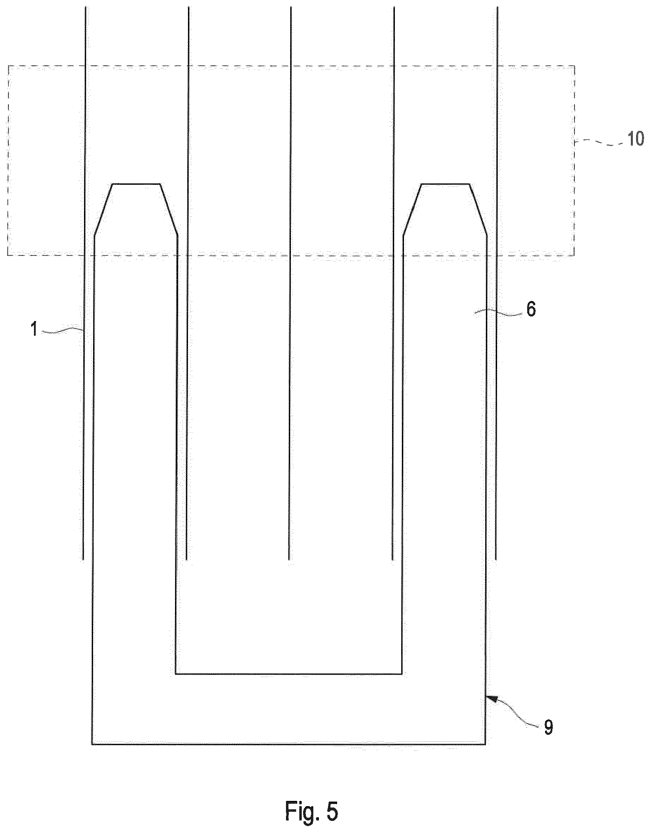

Fig. 5 zeigt ein Hebesystem 9, dessen Gabeln bzw. Zinken 8 unter einem weg zu transportierenden Blech 10 in die Zwischenräume jeweiliger Auflageelemente 1 eingeführt werden können. In einem zweiten Schritt werden die Gabeln bzw. Zinken 8 angehoben. Durch das Anheben der Gabeln bzw. Zinken 8 wird das Blech 10, das auf dem Arbeitstisch aufliegt, aufgenommen und es kann durch das Hebesystem von dem Arbeitstisch weg transportiert werden.

Bei dem Sensor 5, 6 handelt es sich beispielsweise um einen optischen Sensor, insbesondere um einen Laser. Alternativ kann ein Ultraschallsensor eingesetzt werden.

In einer alternativen Ausführungsform sind der Sender und der Empfänger derart gegenüber angeordnet, dass die Zwischenräume von nebeneinander liegenden Auflageelementen im Auflichtverfahren geprüft werden können. Die Sender und Empfänger sind daher in diesem Fall oberhalb und/oder unterhalb des Arbeitstisches angeordnet.

Es sei angemerkt, dass der Begriff "umfassen" im Sinne von beinhalten zu verstehen ist und weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 1: Auflageelemente, insbesondere Gitterroststäbe
- 2: Arbeitstisch, insbesondere Wechseltisch, Schneidtisch
- 3: Verfahrrichtung Sensor
- 4: Schlacke
- 5: Sensor
- 5a: Sender
- 6: Empfänger
- 7: Fremdteil
- 8: Gabel bzw. Zinken eines Hebesystems
- 9: Hebesystem, insbesondere Doppelgabelsystem
- 10: flächiges Werkstück, insbesondere Blech

## Patentansprüche

1. Vorrichtung zum Prüfen auf Fremdteile (7) und/oder von Ablagerungen (4) an Auflageelementen (1) eines Arbeitstisches (2), wobei die Auflageelemente (1) zur Auflage eines flächigen Werkstücks (10) zum Verarbeiten mit einem Laser oder einem Wasserstrahl vorgesehen sind, wobei die Auflageelemente (1) parallel zueinander angeordnet sind und einen ersten Abstand zueinander aufweisen, beinhaltend:
- einen Sensor (5, 6) zum Erkennen der Fremdteile (7) und/oder der Ablagerungen (4) in einem Zwischenraum zwischen jeweils zwei Auflageelementen (1).

2. Vorrichtung nach Anspruch 1, wobei der Sensor (5, 6) den Zwischenraum zwischen einem zweiten Abstand zu einem ersten Auflageelement (1) und einem dritten Abstand zu einem zweiten Auflageelement (1) prüft.

3. Vorrichtung nach einem der Ansprüche 1 oder 2, wobei die Summe des zweiten Abstands und des dritten Abstands kleiner als der erste Abstand ist.

4. Vorrichtung nach einem der Ansprüche 2 oder 3, wobei der erste Abstand in einem Bereich zwischen 50 und 60mm liegt, und bevorzugt insbesondere 54 mm beträgt und/oder wobei der zweite Abstand in einem Bereich zwischen 10 und 15 mm liegt und bevorzugt insbesondere maximal 12 mm beträgt und/oder wobei der dritte Abstand in einem Bereich zwischen 10 und 15 mm liegt und bevorzugt insbesondere maximal 12 mm beträgt.

5. Vorrichtung nach einem der vorhergehenden Ansprüche, wobei der Sensor (5, 6) als Durchlicht- oder Auflichtsensor ausgebildet ist.

6. Vorrichtung nach Anspruch 5, wobei der Sensor (5, 6) einen Sender (5a) und einen Empfänger (6) umfasst, wobei der Sender (5a) derart gegenüber dem Empfänger (6) angeordnet ist, dass der Sensorstrahl parallel und/oder schräg zu den jeweiligen Auflageelementen (1) ausgerichtet ist, deren Zwischenraum zu prüfen ist, oder wobei der Sender (5) und der Empfänger (6) nebeneinander zum Prüfen des Zwischenraums mit dem Triangulationsverfahren angeordnet sind.

7. Vorrichtung nach Anspruch 6, wobei die Vorrichtung erkennt, dass das flächige Werkstück (10) kein Fremdteil (7) oder keine Ablagerungen (4) ist.

8. Vorrichtung nach einem der vorhergehenden Ansprüche, wobei die Vorrichtung ein Element zum Anzeigen, insbesondere Anleuchten, von Ablagerungen (4) und/oder Fremdteilen (7) umfasst.

9. Vorrichtung nach einem der vorhergehenden Ansprüche, wobei der Sensor (5, 6) entlang des Arbeitstisches (2) verfahrbar ist.

10. Verfahren zum Erkennen von Fremdteilen (7) und/oder Ablagerungen (4) an Auflageelementen (1) eines Arbeitstisches (2) mit einer Vorrichtung nach einem der vorhergehenden Ansprüche, aufweisend den Schritt:
- Prüfen des Zwischenraums zwischen einem ersten und einem zweiten Auflageelement (1) auf Fremdteile (7) und/oder Ablagerungen (4).

11. Verfahren nach Anspruch 10, mit den Schritten:
- Verfahren des Sensors (5, 6) entlang des Arbeitstisches (2) und
- Prüfen des Zwischenraums zwischen einem dritten und einem vierten Auflageelement (1) auf Fremdteile (7) und/oder Ablagerungen(4).

12. Verfahren nach einem der Ansprüche 10 oder 11, wobei der Sensor (5, 6) den Zwischenraum zwischen einem ersten Abstand zum ersten Auflageelement (1) und einem zweiten Abstand zum zweiten Auflageelement (1) prüft.

13. Verfahren nach Anspruch 12, wobei der erste Abstand und/oder der zweite Abstand in einem Bereich zwischen 10 und 15 mmm und vorzugsweise wenigstens 12 mm betragen.

14. Verfahren nach einem der Ansprüche 10 bis 13, zusätzlich mit dem Schritt:
- Anzeigen, insbesondere Anleuchten, der Stellen am Arbeitstisch (2), an denen im Zwischenraum Ablagerungen (4) und/oder Fremdteile (7) durch den Sensor (5, 6) detektiert wurden.

15. Verfahren nach einem der Ansprüche 10 bis 14, ferner mit den Schritten:
- Entfernen der Ablagerungen (4) und/oder der Fremdteile (7) durch Pressluft und/oder mit dem Laser oder dem Wasserstrahl oder
- Entfernen der Ablagerungen(4) und/oder der Fremdteile (7) durch Vibration, insbesondere Vibration eines Systems (9) zum Hochheben des Flächiges Werkstücks (10) vom Arbeitstisch (2) nach dessen Bearbeitung.

16. Computerprogrammprodukt, das ein Softwareprogramm zur Realisierung einer Vorrichtung aufweist, wobei das Computerprogrammprodukt einen Satz mit Befehlen umfasst, die veranlassen, ein Verfahren nach einem der Ansprüche 10 bis 15 auszuführen.

17. Computerprogramm, durch elektronische Datenübertragung verteilbar, mit Computerprogrammcodemitteln, die so adaptiert sind, dass sie bewirken, dass bei Laden des Programms auf einen Computer dieser die Prozedur nach einem der Ansprüche 10 bis 16 ausführen kann.
